# EUROPÄISCHE PATENTSCHRIFT

(11) **EP 2 288 822 B1**
(45) Veröffentlichungstag und Bekanntmachung des Hinweises auf die Patenterteilung: **17.12.2014**
(21) Anmeldenummer: 09769116.6
(22) Anmeldetag: 09.06.2009
(51) Int. Cl.: F16H 1/46, H02K 7/116

(54) **AKTUATOR**
ACTUATOR
ACTIONNEUR

(30) Priorität: 24.06.2008 DE 102008030006
(43) Veröffentlichungstag der Anmeldung: 02.03.2011
(73) Patentinhaber: Mahle International GmbH, 70376 Stuttgart (DE)
(72) Erfinder: WEBER, Thomas, 73650 Winterbach (DE)
(74) Vertreter: BRP Renaud & Partner mbB Rechtsanwälte Patentanwälte Steuerberater
(86) Internationale Anmeldenummer: PCT/EP2009/057080
(87) Internationale Veröffentlichungsnummer: WO 2009/156267

(56) Entgegenhaltungen:
- EP-A- 0 170 505
- EP-A- 0 588 769
- WO-A-2005/078312
- WO-A-2006/094804
- DE-A1- 4 412 898
- DE-A1- 10 300 641

## Beschreibung

Die vorliegende Erfindung betrifft einen Aktuator, insbesondere für eine Fahrzeugstelleinrichtung, entsprechend dem Oberbegriffs des Anspruchs 1.Ein solcher Aktuator ist aus dem gattungsbildendem Dokument DE 103 00 641 A1 bekannt.

Stelleinrichtungen dieser Art können bei Fahrzeugen beispielsweise als Klappenstelleinrichtungen zum Einsatz kommen, bei denen zumindest ein Stellglied eine Klappe ist, mit der ein durchströmbarer Querschnitt in einer Gas führenden Leitung des Fahrzeugs steuerbar ist. Eine derartige Klappenstelleinrichtung kann beispielsweise in einem Frischgastrakt oder in einem Abgastrakt einer Brennkraftmaschine oder einer Brennstoffzelle des Fahrzeugs zur Anwendung kommen. Ebenso sind Stelleinrichtungen zum Verstellen einer Leitschaufelgeometrie bei einer Turbine eines Abgasturboladers bekannt. Ferner kann auch ein sogenanntes "Waste-Gate" eines Abgasturboladers mittels einer solchen Stelleinrichtung betätigt werden.

Die vorliegende Erfindung beschäftigt sich mit dem Problem, für einen Aktuator der eingangs genannten Art bzw. für einen damit ausgestatteten Stellantrieb eine verbesserte Ausführungsform anzugeben, die sich insbesondere dadurch auszeichnet, dass sie kompakt baut und/oder vergleichsweise große Stellkräfte bzw. Stellmomente erzeugen kann und/oder eine vereinfachte Montage ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Antriebswelle eines Elektromotors des Aktuators über ein Planetengetriebe mit einer Abtriebswelle des Aktuators zu koppeln. Planetengetriebe bauen extrem kompakt und ermöglichen große Stellkräfte bzw. Stellmomente. Dementsprechend kann auch der Aktuator mit hoher Leistungsdichte ausgestattet werden, so dass er bei kompakter Bauform eine vergleichsweise große Antriebsleistung bereitstellen kann.

Entsprechend einer besonders vorteilhaften Ausführungsform kann das Planetengetriebe zumindest zweistufig ausgebildet sein, wobei die Planetenräder der einzelnen Getriebestufen mit einem gemeinsamen Hohlrad in Eingriff stehen. Durch diesen Vorschlag kann die Leistungsdichte des Planetengetriebes deutlich erhöht werden. Dabei baut die hier vorgeschlagene Ausführungsform besonders kompakt, da die mehreren Getriebestufen mit einem gemeinsamen Hohlrad arbeiten, mit dem die Planetenräder der einzelnen Getriebestufen in Eingriff stehen.

Besonders vorteilhaft ist dabei eine Bauweise, bei der die einzelnen Getriebestufen Gleichteile verwenden, was die Fertigungskosten reduziert. Beispielsweise können die Sonnenräder der Getriebestufen Gleichteile sein. Zusätzlich oder alternativ können die Planetenräder der Getriebenstufen Gleichteile sein. Zusätzlich oder alternativ können die Planetenradträger der Getriebestufen Gleichteile sein.

Besonders kompakt ist auch eine Ausführungsform, bei welcher das gemeinsame Hohlrad einen integralen Bestandteil eines Gehäuses bildet, das zur Aufnahme des Elektromotors vorgesehen ist. Somit sind die Getriebestufen hinsichtlich ihres Hohlrads baulich in das Gehäuse des Aktuators integriert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht einer Stelleinrichtung,
- Fig. 2: eine perspektivische, teilweise geschnittene Ansicht eines Aktuators,
- Fig. 3: einen Längsschnitt durch ein Getriebe des Aktuators,
- Fig. 4: eine perspektivische Ansicht des teilweise geschnittenen Aktuators in auseinandergezogener Darstellung,
- Fig. 5: eine perspektivische, teilweise geschnittene Ansicht des Aktuators,
- Fig. 6: eine perspektivische Ansicht des Getriebes des Aktuators in einer auseinandergezogenen Darstellung bei einer anderen Ausführungsform,
- Fig. 7: eine perspektivische, teilweise geschnittene Ansicht des Aktuators aus Fig. 6,
- Fig. 8: eine perspektivische, teilweise geschnittene Ansicht des Aktuators im Bereich eines Elektromotors, bei verschlossener Einführöffnung,
- Fig. 9: eine perspektivische Ansicht des Aktuators aus Fig. 8 in einer auseinandergezogenen Darstellung,
- Fig. 10: eine perspektivische Ansicht eines Kegelgetriebes,
- Fig. 11: eine Draufsicht des Kegelgetriebes,
- Fig. 12: eine Schnittansicht des Kegelgetriebes,
- Fig. 13: eine vergrößerte Ansicht eines Kegelrads des Kegelgetriebes,
- Fig. 14: ein vergrößerter Ausschnitt XIV des Kegelrads aus Fig. 13, und
- Fig. 15: eine vergrößerte Draufsicht auf einen Zahn des Kegelrads entsprechend einer Blickrichtung XV in Fig. 14.

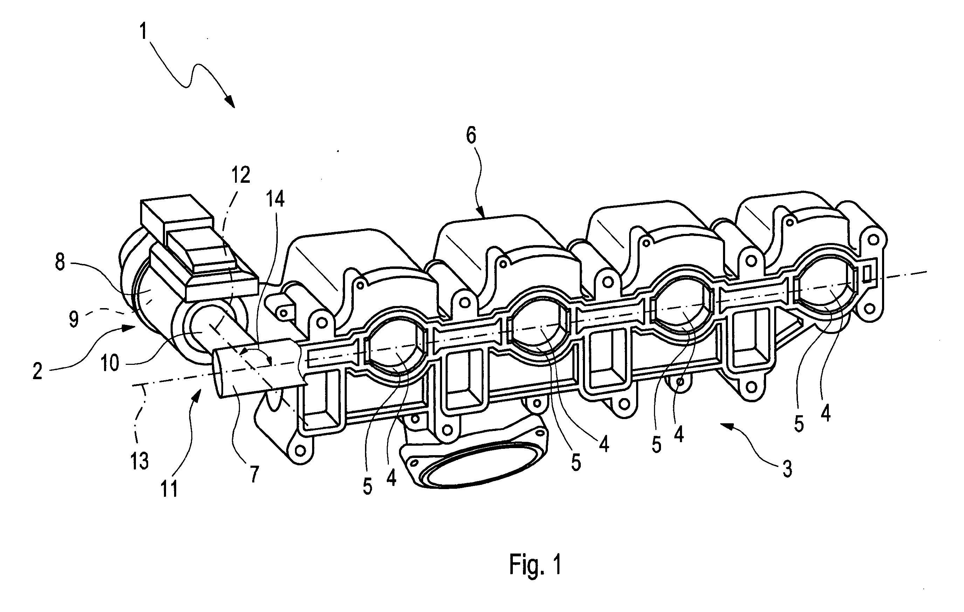

Entsprechend Fig. 1 umfasst eine Stelleinrichtung 1, die insbesondere fest in einem Kraftfahrzeug eingebaut sein kann, einen Aktuator 2 sowie eine Stellgliedanordnung 3. Im Beispiel besitzt die Stellgliedanordnung 3 mehrere, hier vier Stellglieder 4, die exemplarisch als Klappen ausgestaltet sind. Dementsprechend handelt es sich bei der Verstelleinrichtung 1 exemplarisch um eine Klappenstelleinrichtung. Dabei dient das jeweilige Stellglied 4, also die jeweilige Klappe 4 zum Steuern eines durchströmbaren Querschnitts in einer durchströmbaren Leitung 5, und zwar bevorzugt in einem Fahrzeug. Beispielsweise ist die Stelleinrichtung 1 in einem Frischgastrakt einer Brennkraftmaschine eines Fahrzeugs angeordnet und kann dort als Tumbleklappe und/oder als Drallklappe ausgestaltet sein. Im Beispiel ist die Stelleinrichtung 1 in ein Saugmodul 6 integriert, mit dem Frischgas auf die einzelnen Brennräume einer Brennkraftmaschine verteilt wird. Ebenso ist es grundsätzlich möglich, die Stelleinrichtung 1 z.B. bei einem Brennstoffzellensystem beispielsweise zum Steuern des Anodengases oder des Kathodengases oder des Abgases zu verwenden.

Die Stelleinrichtung 1 umfasst eine Betätigungswelle 7, mit deren Hilfe die Stellglieder 4 betätigbar sind. Hierzu ist die Betätigungswelle 7 um ihre Längsmittelachse drehend antreibbar, während die Stellglieder 4 mehr oder weniger drehfest mit der Betätigungswelle 7 verbunden sind.

Der Aktuator 2 besitzt ein Gehäuse 8, in dem ein Elektromotor 9 angeordnet ist. Mit dem Elektromotor 9 ist eine Abtriebswelle 10 des Aktuators 2 drehend antreibbar. Dabei dreht die Antriebswelle 10 um ihre Längsmittelachse. Zur Drehmomentübertragung zwischen der Abtriebswelle 10 und der Betätigungswelle 7 ist ein Kegelgetriebe 11 vorgesehen. Die Abtriebswelle 10 und die Betätigungswelle 7 sind relativ zueinander so orientiert, dass zwischen einer Rotationsachse 12 der Abtriebswelle 10 und einer Rotationsachse 13 der Betätigungswelle 7 ein Winkel 14 vorliegt, der in einem Bereich von einschließlich 60° bis einschließlich 120° liegt und der im gezeigten, bevorzugten Ausführungsbeispiel bei etwa 90° liegt.

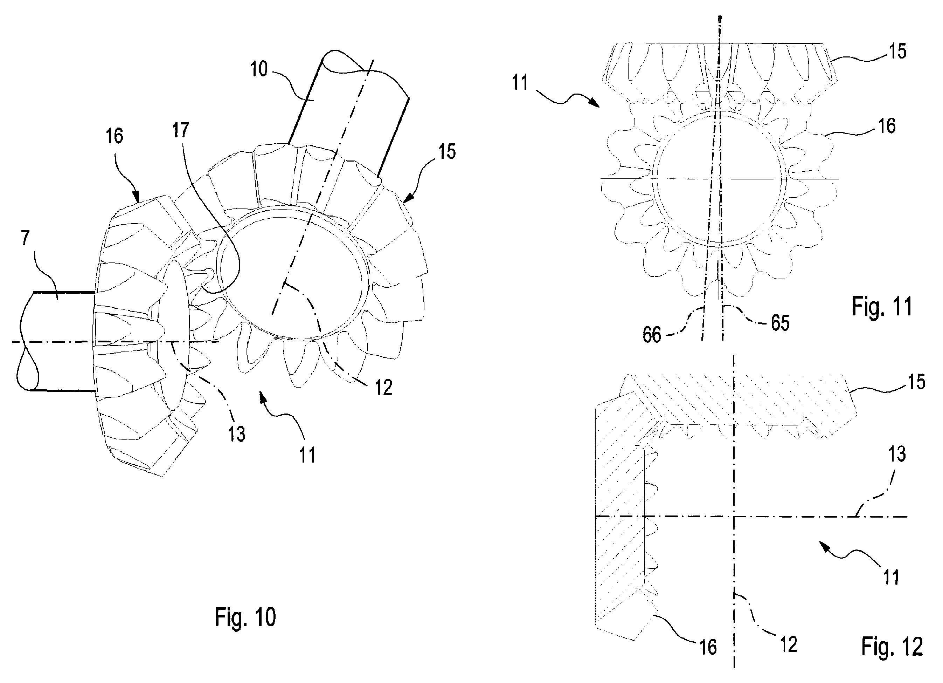

Entsprechend Fig. 10 umfasst das Kegelgetriebe 11 zwei Kegelräder, nämlich ein erstes Kegelrad 15 und ein zweites Kegelrad 16, die in einem Eingriffsbereich 17 miteinander in Eingriff stehen, um die gewünschte Drehmomentübertragung zwischen den Kegelrädern 15, 16 zu realisieren. Das erste Kegelrad 15 ist mit der Abtriebswelle 10 fest verbunden und ist bezüglich der Rotationsachse 12 der Abtriebswelle 10 koaxial angeordnet. Auf entsprechende Weise ist das zweite Kegelrad 16 drehfest mit der Betätigungswelle 7 verbunden und koaxial zur Rotationsachse 13 der Betätigungswelle 7 orientiert. Die drehfeste Kopplung zwischen dem jeweiligen Kegelrad 15, 16 und der jeweiligen Welle 7, 10 kann beispielsweise durch einen Presssitz und/oder durch Formschluss realisiert werden. Ebenso können die Kegelräder 15, 16 mit den Wellen 7, 10 verschweißt und/oder verklebt und/oder verschraubt werden.

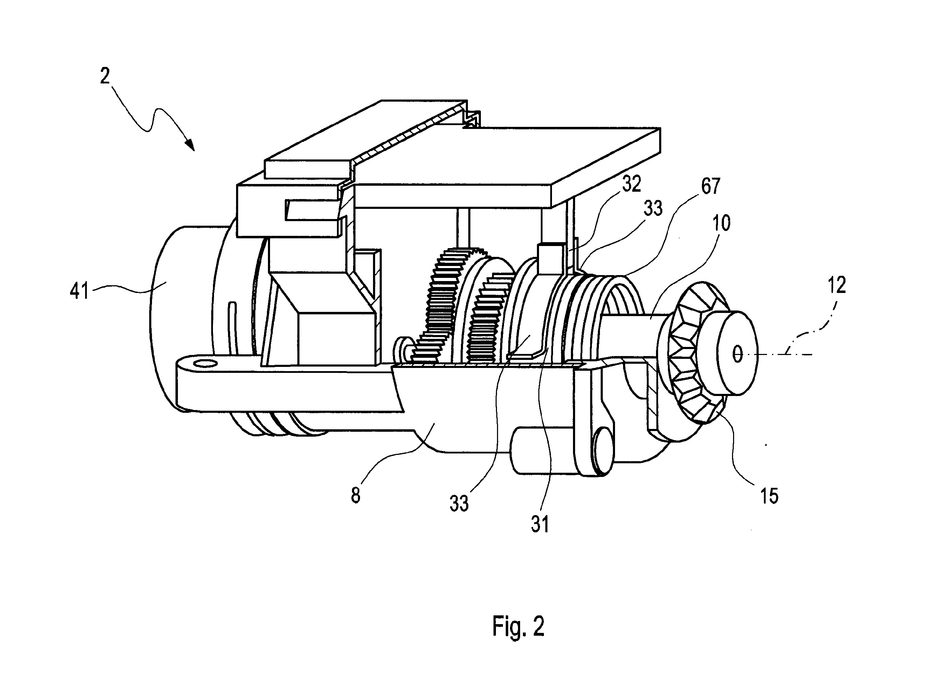

Entsprechend den Fig. 2 bis 7 besitzt der Elektromotor 9 eine drehend antreibbare Antriebswelle 18, die hinsichtlich ihrer Rotationsachse zweckmäßig koaxial zur Rotationsachse 12 der Abtriebswelle 10 orientiert ist. Der Aktuator 2 enthält in seinem Gehäuse 8 ein Planetengetriebe 19. Über dieses Planetengetriebe 19 ist die Antriebswelle 18 mit der Abtriebswelle 10 antriebsverbunden. Das Planetengetriebe 19 besitzt zumindest eine Getriebestufe 20 bzw. 21. Im Beispiel sind genau zwei solche Getriebestufen 20, 21 vorgesehen. Es ist klar, dass bei anderen Ausführungsformen auch nur eine oder drei oder mehr derartige Getriebestufen 20, 21 vorgesehen sein können.

Jede Getriebestufe 20, 21 besitzt ein Sonnenrad 22 bzw. 23 sowie wenigstens zwei Planetenräder 24. Im Beispiel weist jede Getriebestufe 20, 21 drei Planetenräder 24 auf. Das jeweilige Sonnenrad 22, 23 steht mit den zugehörigen Planetenrädern 24 in Eingriff. Die Planetenräder 24 sind jeweils an einem Planetenradträger 25 drehbar gelagert und stehen außerdem mit einem Hohlrad 26 in Eingriff. Dabei ist für beide Getriebestufen 20, 21 hier ein gemeinsames Hohlrad 26 vorgesehen, mit dem alle Planetenräder 24 der beiden Getriebestufen 20, 21 in Eingriff stehen. Bei genau zwei Getriebestufen 20, 21 ist die eine eine antriebsseitige Getriebestufe 20, während die andere eine abtriebsseitige Getriebestufe 21 ist. Bei drei oder mehr Getriebestufen 20, 21 sind zwischen der antriebsseitigen und der abtriebsseitigen Getriebestufe zumindest eine oder mehrere Zwischenstufen angeordnet. Bei der antriebsseitigen Getriebestufe 20 ist das Sonnenrad 22 drehfest mit der Antriebswelle 18 verbunden. Im Unterschied dazu ist bei der abtriebsseitigen Getriebestufe 21 der Planetenradträger 25 mit der Abtriebswelle 10 drehfest verbunden. Dabei ist zwischen der Abtriebswelle 10 und dem jeweiligen Planetenradträger 25 ein axialer Eingriff vorgesehen, der auf einem möglichst großen Durchmesser erfolgt, um möglichst große Drehmomente übertragen zu können. Dieser Drehmoment übertragende Eingriff kann beispielsweise als Steckverbindung ausgestaltet sein.

Bei der hier vorgestellten bevorzugten Ausführungsform sind die Planetenräder 24 der Getriebestufen 20, 21 Gleichteile. Außerdem sind die Planetenradträger 25 als Gleichteile ausgestaltet. Im Beispiel ist der jeweilige Planetenradträger 25 drehfest mit dem Sonnenrad 23 der jeweils nachfolgenden Getriebestufe verbunden. Dies wird bevorzugt dadurch realisiert, dass das jeweilige Sonnenrad 23 der Folgestufe integral mit dem Planetenradträger 25 der vorausgehenden Stufe hergestellt ist. Da die Planetenradträger 25 hier Gleichteile sind, wird auch der Planetenradträger 25 der abtriebsseitigen Getriebestufe 21 mit einem derartigen Sonnenrad 23 versehen, obwohl er an sich kein derartiges Sonnenrad 23 benötigt, da die Drehmomentübertragung zur Abtriebswelle 10 zweckmäßig nicht über dieses zusätzliche Sonnenrad 23, sondern auf andere Weise erfolgt, nämlich bevorzugt auf einem größeren Durchmesser unmittelbar über den Planetenradträger 25.

Das Sonnenrad 22 der eingangsseitigen Getriebestufe 20 ist drehfest mit der Antriebswelle 18 verbunden und ist daher insbesondere kein Gleichteil zu den Sonnenrädern 23 der Planetenradträger 25. Im Unterschied dazu können die Sonnenräder 23 der auf die eingangsseitige Getriebestufe 20 folgenden Getriebestufen wieder als Gleichteile ausgestaltet sein. Ebenso ist es möglich, alle Sonneräder 22, 23 als Gleichteile auszugestalten, wenn sie separat von den Planetenradträgern 25 hergestellt werden und im Rahmen der Montage auf geeignete Weise drehfest mit der Antriebswelle 18 bzw. mit dem jeweiligen Planetenradträger 25 verbunden werden.

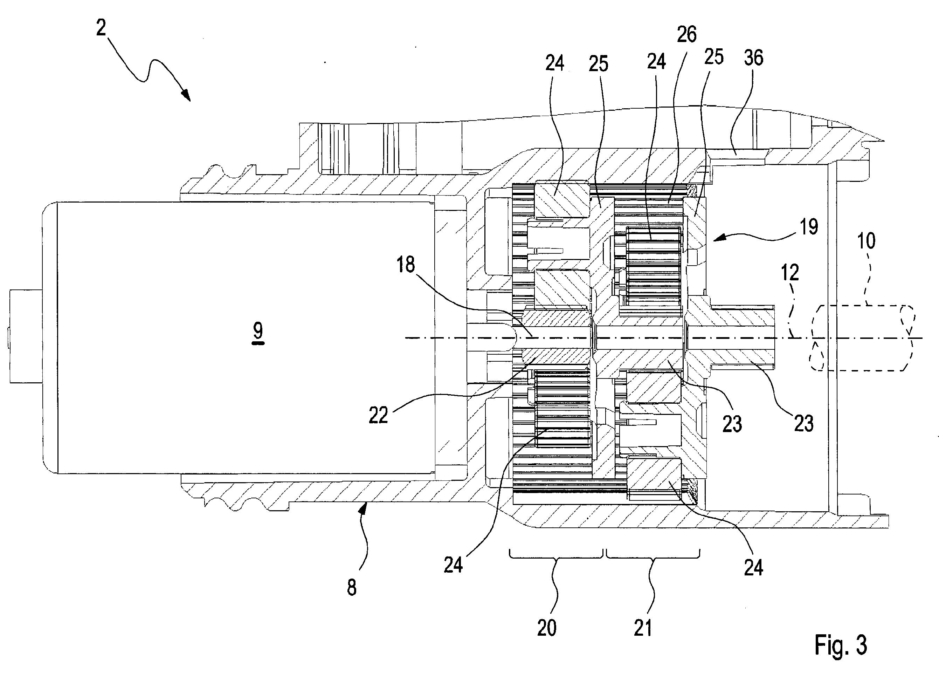

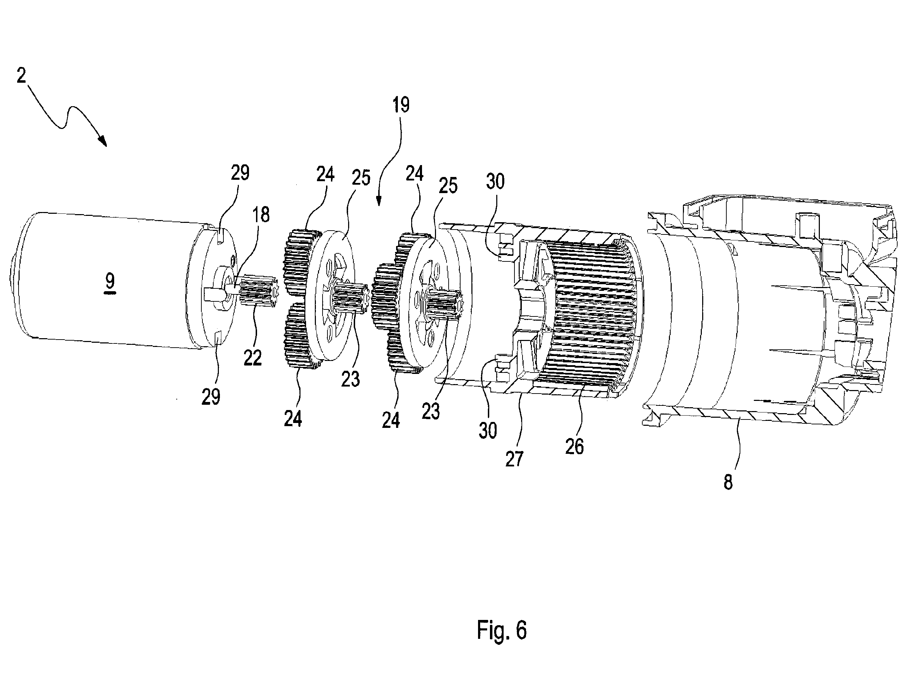

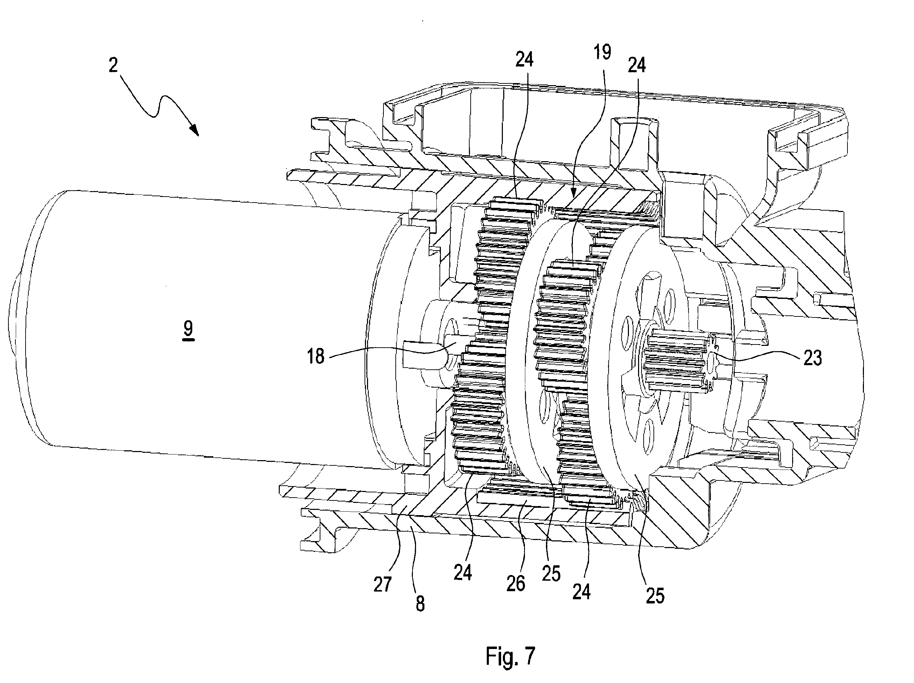

Bei den Ausführungsformen der Fig. 3 bis 5 bildet das Hohlrad 26 einen integralen Bestandteil des Gehäuses 8, das zur Aufnahme des Elektromotors 9 dient. Im Unterschied dazu zeigen die Fig. 6 und 7 eine Ausführungsform, bei welcher das Hohlrad 26 in einem Einsatzteil 27 ausgebildet ist, das bezüglich des übrigen Gehäuses 8 ein separates Bauteil bildet. Durch die Verwendung eines derartigen Einsatzteils 27 kann die Vormontierbarkeit des Planetengetriebes 19 verbessert werden.

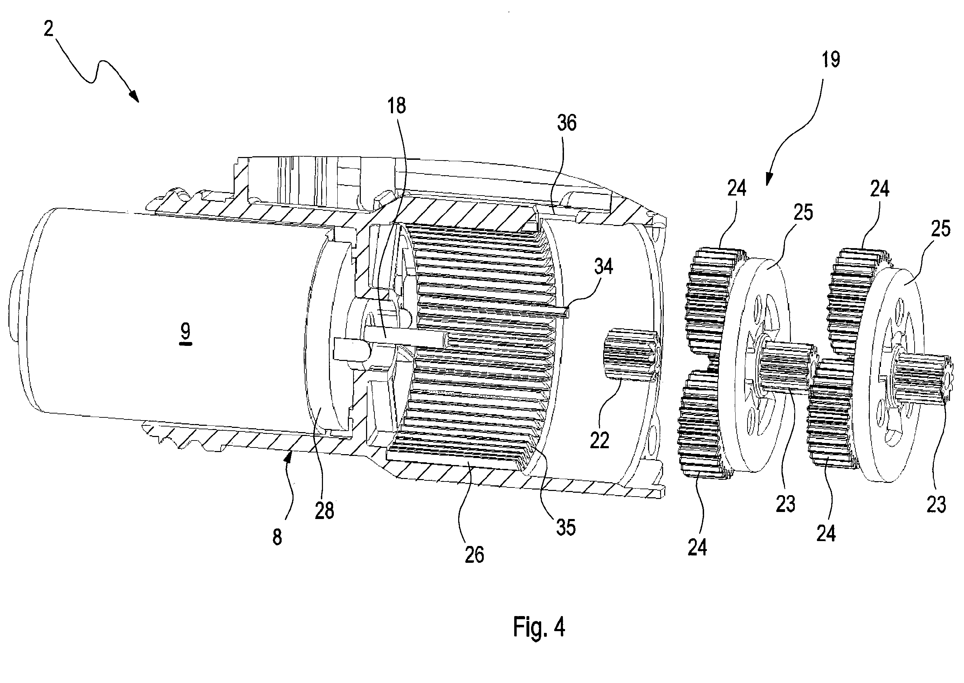

Der Elektromotor 9 besitzt entsprechend den Fig. 4 bis 7 an seinem dem Planetengetriebe 19 zugewandten vorderen Ende 28 zumindest eine, hier zwei Aussparungen 29. Im eingebauten Zustand greifen in diese Aussparungen 29 komplementäre Stege 30 axial ein. Diese Stege 30 sind integrale Bestandteile des Gehäuses 8 bzw. des Einsatzteils 27. Hierdurch wird im Einbauzustand eine Drehmomentabstützung zwischen dem Elektromotor 9 und dem Gehäuse 8 bzw. dem Einsatzteil 27 realisiert.

Das Gehäuse 8 nimmt den Elektromotor 9 und das Planetengetriebe 19 auf bzw. das Einsatzteil 27. Gemäß Fig. 1 ist die Abtriebswelle 10 aus dem Gehäuse 8 herausgeführt und außerhalb des Gehäuses 8 drehfest mit einem Antriebsglied verbunden, das im gezeigten Beispiel durch das erste Kegelrad 15 gebildet ist. Grundsätzlich kann es sich bei dem mit der Antriebswelle 10 antreibbaren Antriebsglied um ein beliebiges Antriebsglied handeln, wie z.B. ein Ritzel oder ein Hebel oder ein Zahnrad oder ein Kupplungselement oder eine Kupplung zur direkten Drehmomentübertragung oder eine beliebige Kombination der vorstehend genannten Antriebsglieder.

Entsprechend Fig. 2 kann eine der Wellen des Aktuators 2 innerhalb des Gehäuses 8 mit einem Signalgeber 31 ausgestattet sein. Im Beispiel ist die Abtriebswelle 10 drehfest mit dem Signalgeber 31 verbunden, so dass eine Rotation der Abtriebswelle 10 mit einer Rotation des Signalgebers 31 einhergeht. Des Weiteren enthält das Gehäuse 8 einen Drehwinkelsensor 32, der so ausgestaltet ist, dass er mit dem Signalgeber 31 berührungslos zusammenwirkt. Insbesondere handelt es sich beim Drehwinkelsensor 32 um einen Hallsensor, der im Folgenden ebenfalls mit 32 bezeichnet wird. Der Hallsensor 32 detektiert Änderungen eines magnetischen Feldes. Zweckmäßig wird als Signalgeber 31 daher ein Permanentmagnet verwendet, der im Folgenden ebenfalls mit 31 bezeichnet wird. Der Permanentmagnet 31 ist drehfest mit der Abtriebswelle 10 verbunden und dabei so polarisiert, dass eine Drehbewegung die Abtriebswelle 10 das magnetische Feld im Bereich des Hallsensors 32 verändert. Hierdurch kann der Hallsensor 32 die Rotation der Abtriebswelle 10 detektieren.

Um die Genauigkeit des Drehwinkelsensors 32 bzw. die winkelmäßige Auflösung des Drehwinkelsensors 32 zu verbessern, sind hier zwei Leitelemente 33 vorgesehen. Diese sind so ausgestaltet, dass sie ein magnetisches Feld des Permanentmagneten 31 zumindest teilweise zum Hallsensor 32 umleiten. Beispielsweise können derartige Leitelemente 33 durch Metallblech gebildet sein. Die Leitelemente 33 erstrecken sich ausgehend vom Hallsensor 32 radial beabstandet zum Permanentmagneten 31 und bezogen auf die Rotationsachse 12 der Abtriebswelle 10 in Umfangsrichtung. Beispielsweise erstreckt sich jedes Leitelement 33 um etwa 90°, so dass sie zusammen den Permanentmagneten 31 etwa um 180° umgreifen.

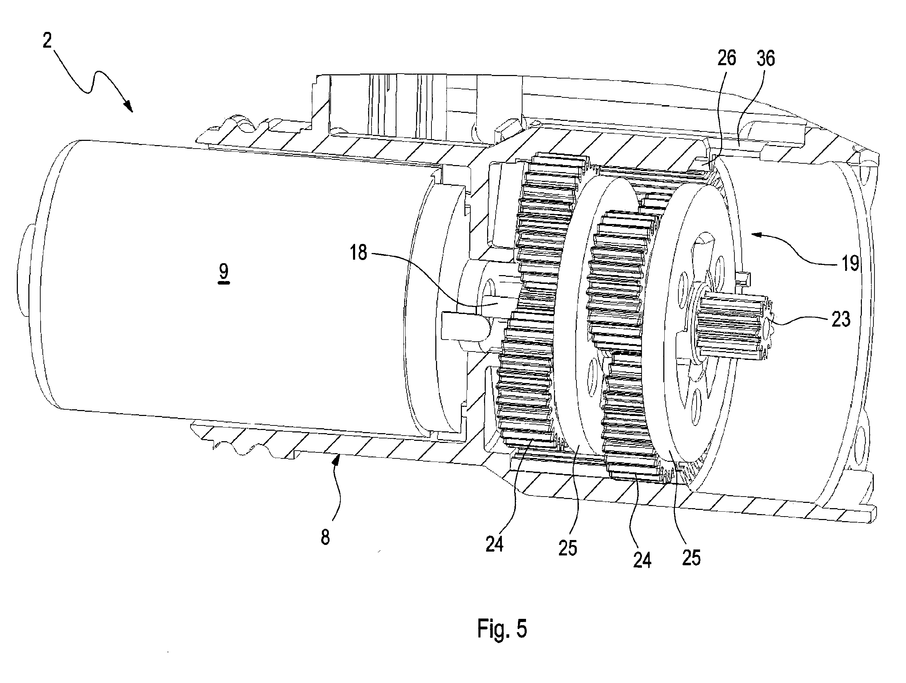

Zur axialen Positionierung der Leitelemente 33 kann es gemäß Fig. 4 und 5 vorgesehen sein, einzelne Zähne 34 einer Verzahnung 35 des Hohlrades 26 axial an einer vom Elektromotor 9 abgewandten Seite zu verlängern. An diesem axial verlängerten Zahn 34 kann das jeweilige Leitelement 33 axial zur Anlage kommen, wodurch es im Gehäuse 8 stabil positioniert ist. Das Gehäuse 8 enthält außerdem im Bereich des Hallsensors 32 eine Durchgangsöffnung 36, durch die der Hallsensor 32 in das Innere des Gehäuses 8 hineinragen kann und durch die der Hallsensor 32 mit einer hier nicht näher dargestellten bzw. nicht näher bezeichneten Auswerteschaltung gekoppelt ist.

Entsprechend Fig. 2 kann außerdem vorgesehen sein, innerhalb des Gehäuses 8 eine Rückstellfeder 67 anzuordnen, die sich einerseits am Gehäuse 8 und andererseits an einer der Wellen, bevorzugt an der Abtriebswelle 10 abstützt. Durch die Rückstellfeder 67 kann der Aktuator 2 bzw. seine Abtriebswelle 10 in eine Endstellung oder in eine zwischen zwei Endstellungen liegende Ausgangsstellung oder Neutralstellung vorgespannt sein. Hierdurch kann insbesondere eine Notlauffunktion für die jeweilige Stelleinrichtung 1 realisiert werden, falls es zu einem Stromausfall kommt und der Elektromotor 9 nicht mehr angesteuert werden kann.

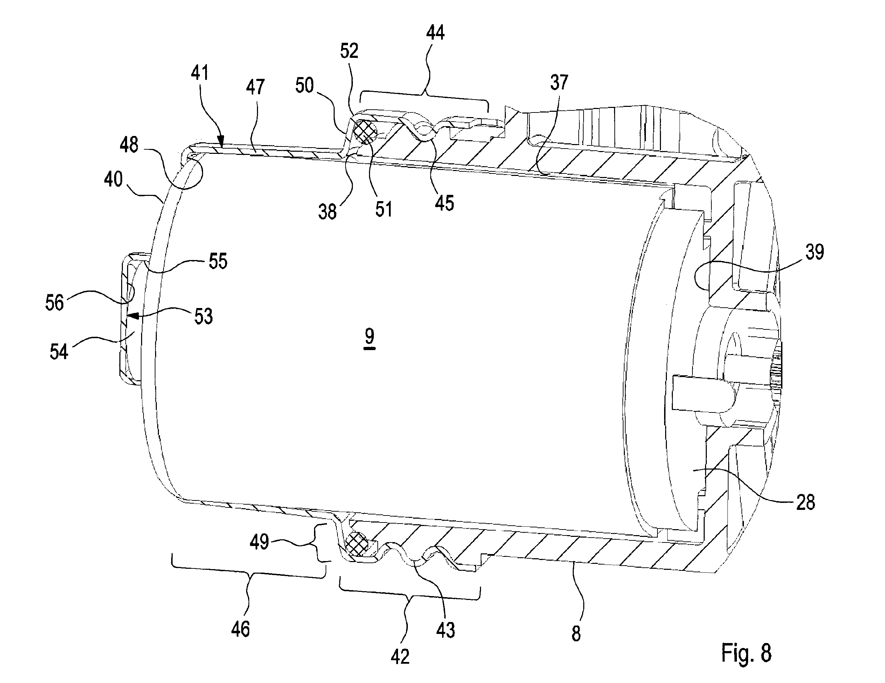

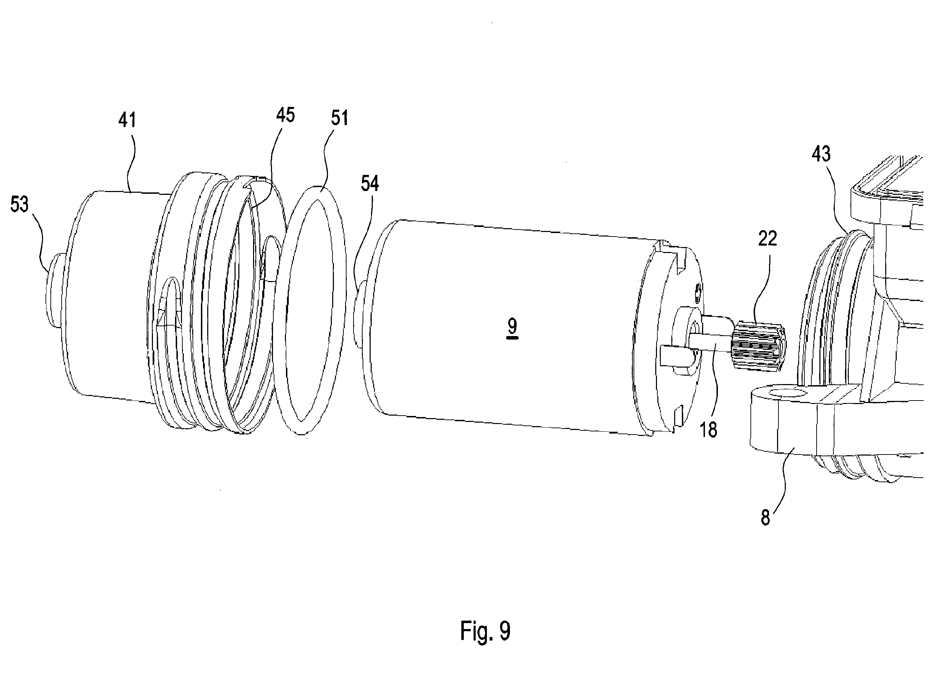

Entsprechend den Fig. 8 und 9 ist zur Unterbringung des Elektromotors 9 im Gehäuse 8 ein Motoraufnahmeraum 37 ausgebildet, der zweckmäßig zylindrisch gestaltet ist und in den der Elektromotor 9 durch eine Einführöffnung 38 bezüglich seiner Antriebswelle 18 axial, also koaxial zur Rotationsachse 12 der Abtriebswelle 10 einführbar ist. Dabei kommt der Elektromotor 9 bei der in Fig. 8 gezeigten Einbaulage an seinem vorderen Ende 28 an einem Boden 39 des Motoraufnahmeraums 37 axial zur Anlage. Im Unterschied dazu ragt der Elektromotor 9 an seinem vom Planetengetriebe 19 entfernten oder abgewandten hinteren Ende 40 axial aus der Einführöffnung 38 heraus. Zum Verschließen der Einführöffnung 38 und zum Positionieren des Elektromotors 9 im Gehäuse 8 ist ein Deckel 41 vorgesehen, der an das Gehäuse 8 anschraubbar ist. An diesem Deckel 41 kommt der Elektromotor 9 mit seinem hinteren Ende 40 axial zur Anlage.

Das Gehäuse 8 weist hierzu in einem Einführabschnitt 42, der die Einführöffnung 38 aufweist, ein Außengewinde 43 auf. Komplementär dazu weist der Deckel 41 einen Gewindeabschnitt 44 auf, der mit einem entsprechenden Innengewinde 45 versehen ist. Des Weiteren weist der Deckel 41 einen Topfabschnitt 46 auf, der eine zylindrische Wand 47 und einen Boden 48 besitzt. An diesem Boden 48 kommt das hintere Ende 40 des Elektromotors 9 im montierten Zustand axial zur Anlage.

Der Deckel 41 besitzt außerdem zwischen dem Topfabschnitt 46 und dem Gewindeabschnitt 44 einen Übergangsabschnitt 49. Dieser ist als axiale Zugfeder ausgestaltet und ermöglicht eine axiale Vorspannung des Elektromotors 9 gegen den Boden 39 des Motoraufnahmeraums 37.

In der gezeigten, bevorzugten Ausführungsform weist der Übergangsabschnitt 49 einen ringförmigen Kragen 50 auf. Dieser ist radial einerseits, hier radial innen mit dem Topfabschnitt 47 und radial andererseits, hier radial außen mit dem Gewindeabschnitt 44 fest verbunden. Insbesondere ist der gesamte Deckel 41 aus einem Stück hergestellt, das integral die einzelnen Abschnitte, also den Topfabschnitt 46, den Gewindeabschnitt 44 und den Übergangsabschnitt 50 aufweist. Beispielsweise handelt es sich beim Deckel 41 um ein Blechformteil oder um ein Kunststoffspritzformteil.

Der Übergangsabschnitt 50 bewirkt eine axiale Positionierung des Topfabschnitts 46 relativ zum Gewindeabschnitt 44. Ferner ist der Übergangsabschnitt 50 so ausgestaltet, dass ein axialer Abstand des Gewindeabschnitts 44 vom Boden 48 des Topfabschnitts 46 gegen eine Rückstellkraft des Übergangsabschnitts 49 vergrößert werden kann. Der Übergangsabschnitt 49 wirkt dabei wie eine Feder. Zweckmäßig sind nun Deckel 41, Gehäuse 8 und Elektromotor 9 so aufeinander abgestimmt, dass sich die Zugfeder, die durch den Übergangsabschnitt 49 gebildet ist, beim Aufschrauben des Deckels 41 spannt und dadurch die erwünschte axiale Vorspannung des Elektromotors 9 gegen den Boden 39 im Motoraufnahmeraum 37 erzeugt. Bei aufgeschraubtem Deckel 41 ist der Elektromotor 9 dann zwischen den Böden 39 und 48 eingespannt.

Im gezeigten Beispiel ist im Bereich der Einführöffnung 38 eine Dichtung 51 zwischen dem Einführabschnitt 42 und dem Deckel 41 angeordnet. Besonders zweckmäßig ist dabei die hier gezeigte Ausführungsform, bei welcher sich die Dichtung 51 an einem Übergang 52 zwischen dem Übergangsabschnitt 49 und dem Gewindeabschnitt 44 befindet. Beim Festschrauben des Deckels 41 wird die Dichtung 51 komprimiert, wodurch die gewünschte Dichtigkeit realisierbar ist.

Bei den gezeigten Ausführungsformen besitzt der Boden 48 des Topfabschnitts 46 eine Mulde 53. Diese ist bezüglich des Deckels 41 zentral angeordnet und topfförmig ausgestaltet. In diese Mulde 53 ragt ein zylindrischer Vorsprung 54 des Elektromotors 9 hinein. Besagter Vorsprung 54 geht vom hinteren Ende 40 des Elektromotors 9 axial ab. Besagter Vorsprung 54 kann beispielsweise ein hier nicht näher dargestelltes Lager für die Antriebswelle 18 des Elektromotors 9 aufweisen. Zweckmäßig sind der Vorsprung 54 und die Mulde 53 hinsichtlich ihrer Dimensionierung so aufeinander abgestimmt, dass zum einen eine radiale Abstützung des Vorsprungs 54 an einer Wand 55 der Mulde 53 erfolgt. Zum anderen ist der Vorsprung 54 in axialer Richtung von einem Boden 56 der Mulde 53 beabstandet. Dementsprechend realisiert die Mulde 53 lediglich eine Zentrierung des Vorsprungs 54 bezüglich der Rotationsachse der Antriebswelle 18. Die axiale Verspannung des Elektromotors 9 erfolgt dagegen außerhalb der Mulde 53 über den Boden 48 des Deckels 41.

Während der Deckel 41 beispielsweise aus einem Metall hergestellt ist, besteht das Gehäuse 8 im Übrigen bevorzugt aus einem Kunststoff. Durch den federelastischen Übergangsabschnitt 49 können thermisch bedingte Dehnungen, die innerhalb des Gehäuses 8, des Deckels 41 und des Elektromotors 9 zu unterschiedlichen Längenänderungen führen können, federelastisch aufgenommen werden.

Zudem übernimmt hier der Deckel 41 im montierten Zustand auch die Funktion eines Kühlblechs für den Elektromotor 9, um die Verlustenergie des Elektromotors 9 an die umgebende Atmosphäre abzugeben. Hierbei wird die Wärme des Elektromotors 9 über die Fläche seines hinteren Endes 40 an die Fläche des Bodens 48 des Deckels 41 übertragen, der z.B. aus Metallblech hergestellt ist. Die Wärme kann somit an die umgebende Atmosphäre abgegeben werden, wodurch der Elektromotor 9 gekühlt wird.

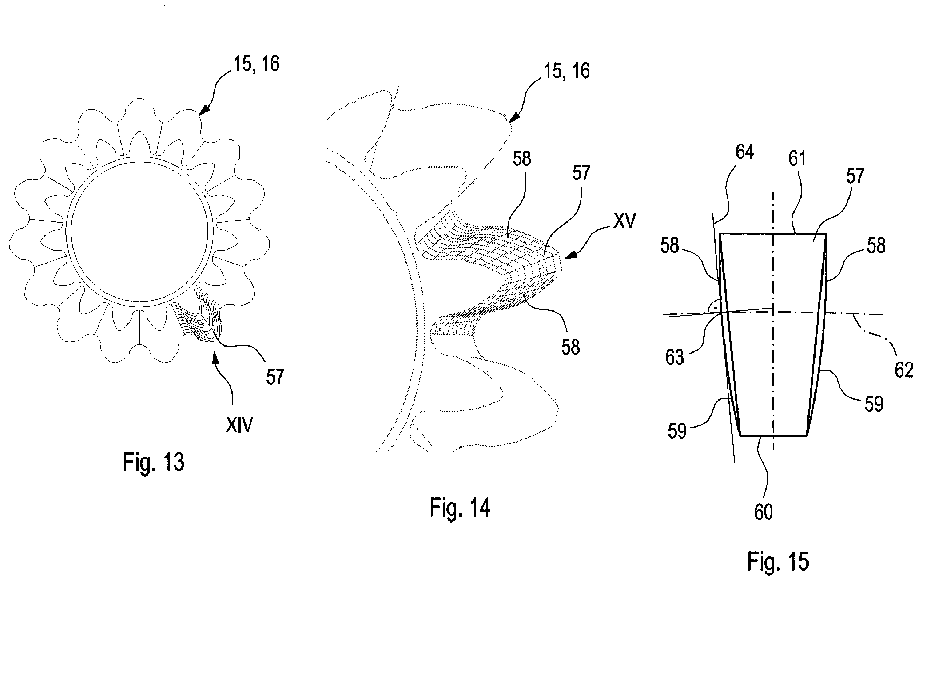

Entsprechend den Fig. 10 bis 15 besitzen die Kegelräder 15, 16 des Kegelgetriebes 11 eine besondere Verzahnung bzw. Zahnform. Fig. 15 zeigt dabei einen einzelnen Zahn 57 eines der Kegelräder 15, 16. Erkennbar besitzt dieser Zahn 57 in seinem radialen Verlauf eine nach außen gewölbte oder konvexe Zahnflanke 58. Die Zahnflanke 58 besitzt somit eine Wölbung 59, die von einem axialen Ende 60 zum anderen axialen Ende 61 des jeweiligen Zahns 57 zunächst zunimmt und wieder abnimmt.

In Fig. 15 ist ein Segment eines Teilkreises 62 des jeweiligen Kegelrads 15, 16 eingetragen. Erkennbar ist die Wölbung 59 der Zahnflanken 58 bei einer bevorzugten Ausführungsform so gestaltet, dass besagter Teilkreis 62 in einem Schnittpunkt 63 mit der Zahnflanke 58 senkrecht auf einer Tangente 64 steht, die im Schnittpunkt 63 an der Zahnflanke 58 anliegt.

Die hier vorgeschlagene gewölbte oder konvexe Zahnflankengeometrie der Kegelräder 15 führt zu einer punktförmigen Kontaktierung im Eingriffsbereich 17 über die Zahnflanken 58. Die gewählte Formgebung für die Zahnflanken 58 kann Lageabweichungen zwischen den Rotationsachsen 12 und 13 der Abtriebswelle 10 und der Betätigungswelle 7 ausgleichen. Zum Beispiel sind die Kegelräder 15, 16 für einen Winkel 14 zwischen den Rotationsachsen 12,13 ausgelegt, der beispielsweise 90° beträgt. Die Auslegung der Kegelräder 15, 16 definiert dabei einen Sollzustand. Aufgrund von Montagetoleranzen ergibt sich jedoch nach dem Zusammenbau des Aktuators 2 bzw. die Stelleinrichtung 1 eine Ist-Situation, die von der Soll-Vorgabe in der Regel abweicht. So können die Rotationsachsen 12, 13 der Abtriebswelle 10 und der Betätigungswelle 7 im montierten Zustand einen von 90° abweichenden Winkel 14 einschließen. Des Weiteren ist es durchaus möglich, dass sich die beiden Rotationsachsen 12, 13 nicht schneiden, was ebenfalls zu einer Lageabweichung der mit den Wellen 10, 7 fest verbundenen Kegelrädern 15, 16 führt. In Fig. 11 sind exemplarisch mit strichpunktierten Linien Lageabweichungen der einen Rotationsachse 12, 13 dargestellt, die von der hier vorgeschlagenen Verzahnung des Kegelgetriebes 11 noch tolerierbar sind. Die eine Linie 65 definiert beispielsweise eine Soll-Orientierung der einen Rotationsachse, während die andere Linie 66 eine noch tolerierbare Ist-Orientierung der jeweiligen Rotationsachse repräsentiert. Erkennbar ist außerdem, dass auch eine gewisse Exzentrizität zwischen den beiden Rotationsachsen 12, 13 tolerierbar ist.

Zusätzlich reicht es aus, eines der beiden Kegelräder 15, 16 in der beschriebenen Weise zu verzahnen. Bevorzugt werden jedoch beide Kegelräder 15, 16 mit der beschriebenen Verzahnung ausgestattet. Bevorzugt ist eine Ausführungsform, bei welcher beide Kegelräder 15, 16 als Gleichteile ausgestaltet sind. Die Kegelräder 15, 16 können insbesondere aus Kunststoff hergestellt sein, wobei eine Spritzformung bevorzugt ist.

## Patentansprüche

1. Aktuator, insbesondere für eine Stelleinrichtung (1) eines Fahrzeugs,
- mit einem Elektromotor (9), der eine drehend antreibbare Antriebswelle (18) aufweist,
- mit einem Gehäuse (8) zur Aufnahme des Elektromotors (9),
- mit einem Planetengetriebe (19) zum Verbinden der Antriebswelle (18) mit einer Abtriebswelle (10) des Aktuators (2),
- wobei der Elektromotor (9) an seinem dem Planetengetriebe (19) zugewandten Ende (28) zumindest eine Aussparung (29) aufweist, in die ein dazu komplementärer, gehäuseseitiger Steg (30) zur Drehmomentabstützung axial eingreift,
**dadurch gekennzeichnet,**
- **dass** der wenigstens eine Steg (30) integral am Gehäuse (8) ausgeformt ist, wobei das Hohlrad (26) integraler Bestandteil des Gehäuses (8) zur Aufnahme des Elektromotors (9) ist, oder
- **dass** der wenigstens eine Steg (30) integral an einem Einsatzteil (27) ausgeformt ist, wobei das Hohlrad (26) integraler Bestandteil des Einsatzteils (27) Ist, das bezüglich des übrigen Gehäuses (8) ein separates Bauteil ist und in das Gehäuse (8) eingesetzt ist.

2. Aktuator nach Anspruch 1,
**dadurch gekennzeichnet,**
- **dass** das Planetengetriebe (19) zumindest zwei Getriebestufen (20, 21) aufweist,
- **dass** jede Getriebestufe (20, 21) ein Sonnenrad (22, 23) aufweist, das mit wenigstens zwei Planetenrädern (24) in Eingriff steht, die an einem Planetenradträger (25) gelagert sind und die mit einem Hohlrad (26) in Eingriff stehen,
- **dass** bei der antriebsseitigen Getriebestufe (20) das Sonnenrad (22) drehfest mit der Antriebswelle (18) verbunden ist, während bei der abtriebsseitigen Getriebestufe (21) der Planetenradträger (25) drehfest mit der Abtriebswelle (10) verbunden ist,
- **dass** für die wenigstens zwei Getriebestufen (20, 21) ein gemeinsames Hohlrad (26) vorgesehen ist, mit dem die Planetenräder (24) der Getriebestufen (20, 21) in Eingriff stehen.

3. Aktuator nach Anspruch 2,
**dadurch gekennzeichnet,**
- **dass** die Sonnenräder (22, 23) der Getriebestufen (20, 21) Gleichteile sind, und/oder
- **dass** die Planetenräder (24) der Getriebestufen (20, 21) Gleichteile sind, und/oder
- **dass** die Planetenradträger (25) der Getriebestufen (20, 21) Gleichteile sind.

4. Aktuator nach Anspruch 2 oder 3,
**dadurch gekennzeichnet,**
**dass** der Planetenradträger (25) einer vorausgehenden Getriebestufe (20) drehfest mit dem Sonnenrad (23) der nachfolgenden Getriebestufe (21) verbunden ist, wobei das jeweilige Sonnenrad (23) insbesondere integral mit dem jeweiligen Planetenradträger (25) hergestellt sein kann.

5. Aktuator nach einem der Ansprüche 1 bis 4,
**dadurch gekennzeichnet,**
**dass** die Abtriebswelle (10) aus einem Gehäuse (8) zur Aufnahme des Elektromotors (9) und des Planetengetriebes (19) herausgeführt ist und außerhalb des Gehäuses (8) ein damit drehfest verbundenes Antriebsglied (15) aufweist.

6. Aktuator nach Anspruch 5,
**dadurch gekennzeichnet,**
**dass** das Antriebsglied ein Ritzel oder ein Hebel oder ein Zahnrad oder ein Kupplungselement oder eine Kupplung zur direkten Drehmomentübertragung oder ein Kegelrad (15) oder eine beliebige Kombination der vorstehenden Antriebsglieder ist.

7. Aktuator nach einem der Ansprüche 1 bis 6,
**dadurch gekennzeichnet,**
**dass** eine der Wellen (10,18) innerhalb eines Gehäuses (8) zur Aufnahme des Elektromotors (9) und des Planetengetriebes (19) einen Signalgeber (31) für einen berührungslos arbeitenden Drehwinkelsensor (32) aufweist, der insbesondere im Gehäuse (8) angeordnet sein kann.

8. Aktuator nach Anspruch 7,
**dadurch gekennzeichnet,**
**dass** der Drehwinkelsensor als Hallsensor (32) ausgestaltet ist und/oder dass der Signalgeber (31) ein drehfest mit der jeweiligen Welle (10, 18) verbundener Permanentmagnet ist.

9. Aktuator nach Anspruch 8,
**dadurch gekennzeichnet,**
**dass** zwei Leitelemente (33) vorgesehen sind, die so ausgestaltet sind, dass sie ein magnetisches Feld des Permanentmagneten (31) zumindest teilweise zum Hallsensor (32) umleiten, die vom Hallsensor (32) ausgehen und die sich radial beabstandet zum Permanentmagneten (31) in Umfangsrichtung erstrecken.

10. Aktuator nach einem der Ansprüche 1 bis 9,
**dadurch gekennzeichnet,**
**dass** In dem Gehäuse (8) zur Aufnahme des Elektromotors (9) und des Planetengetriebes (19) zumindest eine Rückstellfeder (67) angeordnet ist, die einerseits mit dem Gehäuse (8) und andererseits mit einer der Wellen (10, 18) verbunden ist.

11. Aktuator nach einem der Ansprüche 1 bis 10,
**dadurch gekennzeichnet,**
**dass** der Aktuator (2) ein Bestandteil einer Stelleinrichtung (1) eines Fahrzeugs ist, die zumindest ein Stellglied (4) aufweist, das mit dem Aktuator (2) antreibbar ist.

12. Aktuator nach Anspruch 11,
**dadurch gekennzeichnet,**
**dass** die Stelleinrichtung (1) eine Klappenstelleinrichtung ist, deren wenigstens ein Stellglied jeweils eine Klappe (4) zum Steuern eines durchströmbaren Querschnitts in einer durchströmbaren Leitung ist.

13. Aktuator nach Anspruch 12,
**dadurch gekennzeichnet,**
**dass** die jeweilige Klappe (4) eine Tumbleklappe und/oder eine Drallklappe in einem Frischgastrakt einer Brennkraftmaschine des Fahrzeugs oder eine Drosselklappe in einem Frischgastrakt oder in einem Abgastrakt einer Brennkraftmaschine des Fahrzeugs ist.

14. Stelleinrichtung zum Verstellen wenigstens eines Stellglieds (4), insbesondere in einem Kraftfahrzeug, mit einem Aktuator (2) nach einem der Ansprüche 1 bis 13 zum Antreiben des wenigstens einen Stellglieds (4).

## Claims

1. An actuator, in particular for an adjusting device (1) of a vehicle,
- comprising an electric motor (9) having a rotationally drivable input shaft (18),
- a housing (8) for receiving the electric motor (9),
- a planetary gear unit (19) for connecting the input shaft (18) to an output shaft (10) of the actuator (2),
- wherein the electric motor (9), at its end (28) facing towards the planetary gear unit (19), has at least one recess (29) in which a web (30) at the housing engages axially, which web is complementary to the recess and serves for supporting the torque,
**characterized in**
- **that** the at least one web (30) is integrally formed on the housing (8), wherein the annulus gear (26) is an integral part of the housing (8) for receiving the electric motor (9), or
- **that** the at least one web (30) is integrally formed on an inset (27), wherein the annulus gear (26) is an integral part of the inset (27) which is a separate component with respect to the remaining housing (8) and is inserted into the housing (8).

2. The actuator according to claim 1,
**characterized in**
- **that** the planetary gear unit (19) has at least two gear stages (20, 21),
- **that** each gear stage (20, 21) has a sun gear (22, 23) that is engaged with at least two planetary gears (24) which are mounted on a planetary carrier (25) and are engaged with the annulus gear (26),
- **that** at the input gear stage (20), the sun gear (22) is connected to the input shaft (18) in a rotationally fixed manner, whereas at the output gear stage (21), the planetary carrier (25) is connected to the output shaft (10) in a rotationally fixed manner,
- **that** for the at least two gear stages (20, 21) a common annulus gear (26) is provided with which the planetary gears (24) of the gear stages (20, 21) are engaged.

3. The actuator according to claim 2,
**characterized in**
- **that** the sun gears (22, 23) of the gear stages (20, 21) are identical parts, and/or
- **that** the planetary gears (24) of the gear stages (20, 21) are identical parts, and/or
- **that** the planetary carriers (25) of the gear stages (20, 21) are identical parts.

4. The actuator according to claim 2 or 3,
**characterized in**
**that** the planetary carrier (25) of a preceding gear stage (20) is connected to the sun gear (23) of the subsequent gear stage (21), wherein the respective sun gear (23) can in particular be manufactured integrally with the respective planetary carrier (25).

5. The actuator according to any one of claims 1 to 4,
**characterized in**
**that** the output shaft (10) is fed out of the housing (8) for receiving the electric motor (9) and the planetary gear unit (19), and outside of the housing (8), the output shaft has a drive element (15) connected thereto in a rotationally fixed manner.

6. The actuator according to claim 5,
**characterized in**
**that** the drive element is a sprocket or a lever or a gear wheel or a coupling element or a coupling for direct torque transmission or a bevel gear wheel (15) or any combination of the aforementioned drive elements.

7. The actuator according to any one of claims 1 to 6,
**characterized in**
**that** inside of the housing (8) for receiving the electric motor (9) and the planetary gear unit (19), one of the shafts (10, 18) has a signal generator (31) for a rotary sensor (32) which operates in a noncontact manner and which can in particular be arranged in the housing (8).

8. The actuator according to claim 7,
**characterized in**
**that** the rotary sensor is configured as a Hall sensor (32) and/or that the signal generator (31) is a permanent magnet that is connected to the respective shaft (10, 18) in a rotationally fixed manner.

9. The actuator according to claim 8,
**characterized in**
**that** two conducting elements (33) are provided which are configured in such a manner that they redirect a magnetic field of the permanent magnet (31) at least partially to the Hall sensor (32), which extend from the Hall sensor (32) and which extend radially spaced apart from the permanent magnet (31) in the circumferential direction.

10. The actuator according to any one of claims 1 to 9,
**characterized in**
**that** at least one return spring (67) is arranged in the housing (8) for receiving the electric motor (9) and the planetary gear unit (19), which return spring is connected, on the one hand, to the housing (8), and on the other hand, to one of the shafts (10, 18).

11. The actuator according to any one of the claims 1 to 10,
**characterized in**
**that** the actuator (2) is an integral part of an adjusting device (1) of a vehicle, which adjusting device has at least one adjusting element (4) that can be driven by the actuator (2).

12. The actuator according to claim 11,
**characterized in**
**that** the adjusting device (1) is a flap adjusting device, the at least one adjusting element of which is a flap (4) for controlling a cross-section through which a flow can pass in a line through which a flow can pass.

13. The actuator according to claim 12,
**characterized in**
**that** the respective flap (4) is a tumble flap and/or swirl flap in a fresh gas duct or in an exhaust gas duct of an internal combustion engine of the vehicle.

14. An adjusting device for adjusting at least one adjusting element (4), in particular in a motor vehicle, comprising an actuator (2) according to any one of the claims 1 to 13 for driving the at least one adjusting element (4).

## Revendications

1. Actionneur, notamment pour un dispositif de réglage (1) d'un véhicule automobile,
- comportant un moteur électrique (9), qui présent un arbre d'entraînement (18) pouvant être entraîné en rotation,
- comportant un logement (8) pour renfermer le moteur électrique (9),
- comportant une transmission par engrenage planétaire (19) pour relier l'arbre d'entraînement (18) avec un arbre de sortie (10) de l'actionneur (2),
- dans lequel le moteur électrique (9) présente sur son extrémité (28) tournée vers la transmission par engrenage planétaire (19) au moins un évidement (29), dans lequel vient en prise axialement un gradin (30) complémentaire à ce dernier, du côté du logement en vue d'une assistance au couple de rotation,
**caractérisé**
- **en ce qu'**au moins un gradin (30) est façonné en un seul tenant sur le logement (8), dans lequel la couronne (26) est partie intégrante du logement (8) pour renfermer le moteur électrique (9), ou
- **en ce qu'**au moins un gradin (30) est façonné en un seul tenant sur un insert (27), dans lequel la couronne (26) est partie intégrante de l'insert (27), qui est un composant séparé par rapport au reste du logement (8) et est inséré dans le logement (8).

2. Actionneur selon la revendication 1,
**caractérisé**
- **en ce que** la transmission par engrenage planétaire (19) présente au moins deux étages de transmission (20, 21),
- **en ce que** chaque étage de transmission (20, 21) présente un engrenage solaire (22, 23), qui vient en prise avec au moins deux engrenages planétaires (24), qui sont positionnés dans un support d'engrenage planétaire (25) et qui viennent en prise avec une couronne (26),
- **en ce que** sur l'étage de transmission du côté d'entraînement (20) l'engrenage solaire (22) est relié de manière solidaire en rotation à l'arbre d'entraînement (18), alors que sur l'étage de transmission du côté de sortie (21) le support d'engrenage planétaire (25) est relié de manière solidaire en rotation à l'arbre de sortie (10),
- **en ce que** pour au moins deux étages de transmission (20, 21) une couronne commune (26) est prévue, avec laquelle les engrenages planétaires (24) des étages de transmission (20, 21) viennent en prise.

3. Actionneur selon la revendication 2,
**caractérisé**
- **en ce que** les engrenages solaires (22, 23) des étages de transmission (20, 21) sont des pièces identiques et/ou
- **en ce que** les engrenages planétaires (24) des étages de transmission (20, 21) sont des pièces identiques, et/ou
- **en ce que** les supports d'engrenages planétaires (25) des étages de transmission (20, 21) sont des pièces identiques.

4. Actionneur selon la revendication 2 ou 3,
**caractérisé**
**en ce que** le support d'engrenage planétaire (25) d'un étage de transmission précédent (20) est relié de manière solidaire en rotation avec l'engrenage solaire (23) de l'étage de transmission suivant (21), dans lequel l'engrenage solaire respectif (23) peut notamment être fabriqué en un seul tenant avec le support d'engrenage planétaire respectif (25).

5. Actionneur selon une des revendications 1 à 4,
**caractérisé**
**en ce que** l'arbre de sortie (10) est constitué d'un logement (8) pour renfermer le moteur électrique (9) et l'engrenage planétaire (19) et présente à l'extérieur du logement (8) un organe d'entraînement (15) relié à celui-ci de manière solidaire en rotation.

6. Actionneur selon la revendication 5,
**caractérisé**
**en ce que** l'organe d'entraînement est un pignon ou un levier ou une roue dentée ou un élément de couplage ou un couplage à des fins de transmission de couple de rotation directe ou un engrenage conique (15) ou une combinaison au choix des organes d'entraînement précédents.

7. Actionneur selon une des revendications 1 à 6,
**caractérisé**
**en ce que** un des arbres (10, 18) présente à l'intérieur d'un logement (8) pour renfermer le moteur électrique (9) et la transmission par engrenage planétaire (19) un émetteur de signaux (31) pour un capteur d'angle de rotation (32) fonctionnant sans contact, qui peut notamment être disposé dans le logement (8).

8. Actionneur selon la revendication 7,
**caractérisé**
**en ce que** le capteur d'angle de rotation (32) est conçu comme un capteur de Hall et/ou en ce que l'émetteur de signaux (31) est un aimant permanent relié de manière solidaire en rotation à l'arbre respectif (10, 18).

9. Actionneur selon la revendication 8,
**caractérisé**
**en ce que** deux éléments conducteurs (33) sont prévus, qui sont conçus de telle sorte qu'ils dévient un champ magnétique de l'aimant permanent (31) au moins partiellement vers le capteur de Hall (32), qui partent du capteur de Hall (32) et s'étendent radialement en espacement par rapport aux aimants permanents (31) dans la direction circonférentielle.

10. Actionneur selon une des revendications 1 à 9,
**caractérisé**
**en ce que** sur le logement (8) pour renfermer le moteur électrique (9) et la transmission par engrenage planétaire (19) au moins un ressort de repositionnement (67) est disposé, qui est relié d'un côté au logement (8) et d'un autre côté à un des arbres (10, 18).

11. Actionneur selon une des revendications 1 à 10,
**caractérisé**
**en ce que** l'actionneur (2) est partie intégrante d'un dispositif de réglage (1) d'un véhicule automobile, qui présente au moins un organe de réglage (4), qui peut être entraîné avec l'actionneur (2).

12. Actionneur selon la revendication 11,
**caractérisé**
**en ce que** le dispositif de réglage (1) est un dispositif de réglage à clapet, dont au moins un organe de réglage est respectivement un clapet (4) pour commander une section transversale traversée par un écoulement dans une conduite traversée par un écoulement.

13. Actionneur selon la revendication 12,
**caractérisé**
**en ce que** le clapet respectif (4) est un clapet Tumble et/ou un clapet à torsion dans une conduite de gaz frais d'un moteur à combustion interne du véhicule ou une vanne papillon dans une conduite de gaz frais ou dans une conduite de gaz d'échappement d'un moteur à combustion interne du véhicule.

14. Dispositif de réglage pour régler au moins un organe de réglage (4), notamment dans un véhicule automobile, comportant un actionneur (2) selon une des revendications 1 à 13 pour entraîner au moins un organe de réglage (4).
